(19) Europäisches Patentamt / European Patent Office / Office européen des brevets

(11) **EP 3 184 606 A1**

(12) **EUROPEAN PATENT APPLICATION**

(43) Date of publication:
28.06.2017 Bulletin 2017/26

(51) Int Cl.:
*C10G 1/02* *(2006.01)*    *C10B 53/02* *(2006.01)*
*C10G 1/00* *(2006.01)*

(21) Application number: 15201711.7

(22) Date of filing: 21.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: **Shell Internationale Research Maatschappij B.V.**
**2596 HR  Den Haag (NL)**

(72) Inventors:
• LANGE, Jean Paul Andre Marie Joseph Ghislain
1031 HW Amsterdam (NL)
• KUMAR, Shushil
1031 HW Amsterdam (NL)

(74) Representative: **Matthezing, Robert Maarten et al**
**Shell International B.V.**
**Intellectual Property Services**
**P.O. Box 384**
**2501 CJ The Hague (NL)**

(54) **PROCESS FOR CONVERSION OF A CELLULOSIC MATERIAL**

(57)    A process for the high temperature conversion of a cellulosic material into a bio-oil, wherein, in the absence of any externally added catalyst and in an inert atmosphere, the cellulosic material is contacted in a reaction vessel with a liquid solvent, wherein water is present from 2% up to 30 wt%, based on the total amount of cellulosic material and liquid solvent present in the vessel, at an operating temperature in the range from equal to or more than 260°C to equal to or less than 400°C, and at an operating pressure that is lower than the autogenous pressure at the operating temperature, the pressure being from equal to or more than 1.0 MPa to equal to or less than 8.0 MPa, to produce a product mixture comprising bio-oil.

Labels: Pressure (Feed composition; Guaiacol: Wood: Water)

1-> 71 bar (70:20:10)

2-> 41 bar (70:20:10)

3-> 33 bar (70:20:10)

Fig. 1

EP 3 184 606 A1

**Description**

FIELD OF THE INVENTION

The invention relates to a process for conversion of a cellulosic material and use of the products produced in such a process.

BACKGROUND TO THE INVENTION

With the diminishing supply of crude mineral oil, use of renewable energy sources is becoming increasingly important for the production of liquid fuels. These fuels from biological sources are often referred to as biofuels.

Biofuels derived from non-edible biological sources, such as cellulosic materials, are preferred as these do not compete with food production. These biofuels are also referred to as second generation, or advanced, biofuels. Most of these non-edible cellulosic materials, however, are solid materials that are cumbersome to convert into biofuels. A first step in conversion of these cellulosic materials is therefore a liquefaction of the cellulosic material into a liquid.

WO 2013/072383 describes a process for the conversion of a cellulosic material into a bio-oil, comprising the steps of contacting the cellulosic material with a liquid solvent in an inert atmosphere at a reaction temperature in the range from equal to or more than 260°C to equal to or less than 400°C to produce a product mixture; then separating a middle fraction from the product mixture, to produce a product mixture middle fraction; and recycling a first volume part of the product mixture middle fraction to be used as part of the liquid solvent; and using a second volume part of the product mixture middle fraction to produce a bio-oil. It was found that the addition of water in the feed and the removal of light and heavy products allows the build-up of bio-oil through consecutive refill of wood without severe increase in the by-production of heavy residual oil and the concomitant increase in oil viscosity.

Thus, water appears to favor the liquefaction process, i.e. water appears to be instrumental in depolymerizing the biomass. Therefore, at present, liquefaction of biomass is performed by using wet feedstock. Generally, liquefaction takes place in a highpressure reactor, suitable for continuous operation, but possibly also in an autoclave or a similar pressure system. The presence of water in the liquefaction process results in high operating pressures (>80 bar) in the reactor system due to steam formation at high operation temperature, which generally is above 300°C. The high pressure in the reaction system is the autogenous pressure, being the pressure that corresponds to the saturated vapor pressure above the solution at the specified temperature and composition of the solution (i.e. the natural pressure obtained upon heating the system). However, high pressures require the use of high pressure reaction vessels and a feeding device that is suitable for feeding solids and/or slurries at high pressures. Alternatively, to avoid the pressures going up too high, pre-drying of the feedstock may be considered, however that requires additional equipment and energy consumption and results in lower yields or longer reaction times.

It would be advancement in the art to provide an economically attractive process for conversion of a cellulosic material, which allows the use of water in the liquefaction process while avoiding the above described drawbacks.

SUMMARY OF THE INVENTION

Such advancement has been achieved with the process according to the invention. According to the present invention, it has been found that wet biomass (in particular lignocellulosic) feedstock can be liquefied to bio-oil with a high oil yield (even up to about 95%) at moderate pressure in the absence of catalyst or reactive atmosphere. This is achieved by allowing excess pressure to escape the liquefaction vessel. It was found that such pressure control did not have detrimental effect on oil yield, even though a reduction of the presently well-known beneficial effect of steam on the liquefaction process was expected to result in lower oil yields.

Accordingly, the present invention provides a process for the high temperature conversion of a cellulosic material into a bio-oil, wherein, in the absence of any externally added catalyst and in an inert atmosphere, the cellulosic material is contacted in a reaction vessel with a liquid solvent, wherein water is present from 2% up to 30 wt%, based on the total amount of cellulosic material and liquid solvent present in the vessel, at an operating temperature in the range from equal to or more than 260°C to equal to or less than 400°C, and at an operating pressure that is lower than the autogenous pressure at the operating temperature, the pressure being from equal to or more than 1.0 MPa to equal to or less than 8.0 MPa, to produce a product mixture comprising bio-oil.

The process according to the invention allows a number of improvements when compared to prior art processes: to avoid the use of high pressure reaction vessels, to avoid the need for high pressure feeding devices, to avoid pre-drying the feedstock, while still delivering high oil yields.

BRIEF DESCRIPTION OF THE FIGURE

The invention is illustrated by the following figure:

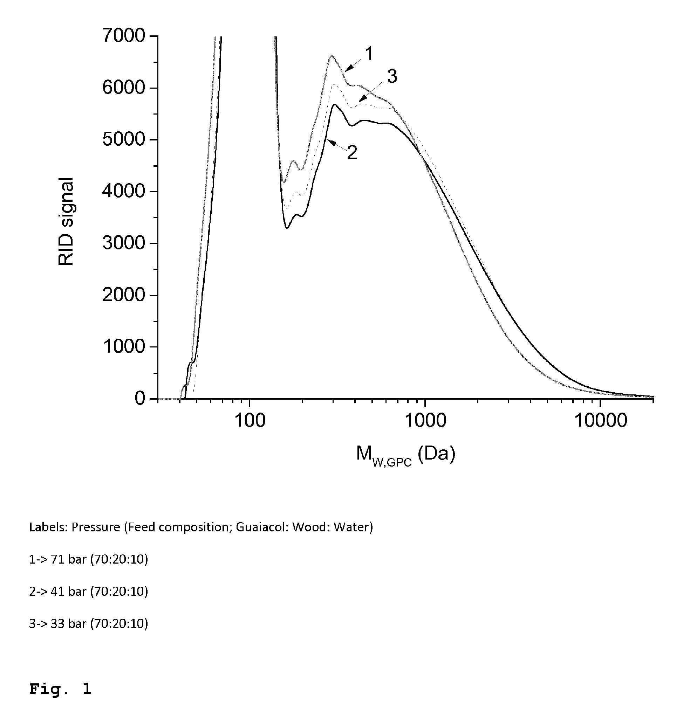

Figure 1 shows the apparent molecular weight distribution of the liquids obtained with different reactor pressures. Feed composition in wt% is shown between the brackets (Guaiacol:Wood:Water).

DETAILED DESCRIPTION OF THE INVENTION

In the process according to the invention, the operating pressure (also called the "set pressure", being the pressure which was preselected as the pressure at which to carry out the reaction) is kept relatively low, being from equal to or more than 1.0 MPa (10 bar absolute) to equal to or less than 8.0 MPa (80 bar absolute), and is being kept lower than the autogenous pressure at the operating temperature. The autogenous reactor pressure herein is defined as the highest pressure that is measured in a reactor vessel, when a liquefaction reaction is carried at a desired temperature in a fully closed vessel. Preferably, the operating pressure is in the range from equal to or more than 2.0 MPa (20 bar absolute), more preferably equal to or more than 2.5 MPa (25 bar absolute), even more preferably equal to or more than 3.0 MPa (30 bar absolute), to equal to or less than 7.0 MPa (70 bar absolute), more preferably equal to or less than 6.0 MPa (60 bar absolute), even more preferably equal to or less than 5.5 MPa (55 bar absolute), still more preferably equal to or less than 5.0 MPa (50 bar absolute), especially equal to or less than 4.5 MPa (45 bar absolute).

In an embodiment of the invention, the operating pressure of the reactor vessel in set to less than 90% of the steam saturation pressure that corresponds to the operating reaction temperature applied, preferably <80%, more preferably <70%, more preferably <50% of the steam saturation pressure. For reference, the steam saturation pressure amounts to about 4 MPa, to about 8 MPa and to about 15 Mpa at 250°C, 300°C and 350°C, respectively, as can be found in engineering text books (CRC Handbook of Chemistry and Physics, 83rd Edition, D.R. Lide (Ed.), 2003, p 6-10 to 6-11).

In another embodiment, the pressure of the reactor vessel is set to less than 90% of the autogenous pressure of the reaction medium, which includes water, liquid solvent and optionally gases, at the reaction temperature applied. Preferably, the reactor pressure is set at <80%, more preferably <70%, more preferably <50% of the autogenous pressure of the reaction medium. For reference, the use of a high-boiling liquid solvent such as guaiacol or methylnaphthalene at about 300°C leads to a liquid solvent vapour pressure of 1-1.5 MPa, to which a steam saturation pressure of about 8 MPa, may add to constitute the largest part of the autogenous pressure, depending on water concentration.

The pressure may be controlled using any system known in the art. In an embodiment, the reaction vessel is provided with a pressure control system that opens a pressurization valve and shuts it once the internal pressure has reached a certain setpoint in the desired pressure range ("set pressure"). Depressurization occurs when the dump valve is opened. The valves may be used in an on/off operation rather than modulating, for cost reasons.

In another embodiment, the reaction vessel is equipped with an open gas restriction outlet that lead to a compartment of low but controlled pressure, e.g. atmospheric or near atmospheric pressure, which is also to be understood as being a pressure control system. The gas restriction outlet is designed such as to control the escape of gas via a pressure drop forced onto the restriction. The higher the pressure drop, i.e. the higher the pressure inside the reaction vessel, the higher the gas escape flow. The gas restriction outlet may be of fixed opening or adjustable opening as applied e.g. in flow-control valves.

The wording "high temperature conversion of a cellulosic material" as used herein may also be referred to herein as liquefaction, and the product mixture obtained may also be referred to herein as liquefaction product. In such a liquefaction process the cellulosic material is liquefied. By liquefaction (also herein referred to as liquefying) is herein understood the -at least partial- conversion of a solid material, such as cellulosic material, into one or more liquefied products.

By a liquefied product is herein understood a product that is liquid at ambient temperature (20°C) and pressure (0.1 MPa) and/or a product that can be converted into a liquid by melting (for example by applying heat) or dissolving in a solvent. Preferably the liquefied product is a liquefied product that is liquid at a temperature of 80°C and a pressure of 0.1 MPa. The liquefied product may vary widely in its viscosity and may be more or less viscous.

Liquefaction of a cellulosic material can comprise cleavage of covalent linkages in that cellulosic material. For example liquefaction of lignocellulosic material can comprise cleavage of covalent linkages in cellulose, hemicellulose and/or lignin present and/or cleavage of covalent linkages between lignin, hemicelluloses and/or cellulose.

As used herein, a cellulosic material refers to a material containing cellulose. Preferably the cellulosic material is a lignocellulosic material. A lignocellulosic material comprises lignin, cellulose and optionally hemicellulose.

Advantageously, according to the process of the invention, not only the cellulose is liquefied but also the lignin and hemicelluloses.

Any suitable cellulose-containing material may be used as cellulosic material in the process according to the present invention. The cellulosic material for use according to the invention may be obtained from a variety of plants and plant materials including agricultural wastes, forestry wastes, sugar processing residues and/or mixtures thereof. Examples of suitable cellulose-containing materials include agricultural wastes such as corn stover, soybean stover, corn cobs, rice straw, rice hulls, oat hulls, corn fibre, cereal straws such as wheat, barley, rye and oat straw; grasses; forestry products such as wood and wood-related materials such as sawdust; waste paper; sugar processing residues such as bagasse and beet pulp; or mixtures thereof.

Although wet feedstock may be used according to the process of this invention, the process may optionally comprise a pretreatment step comprising drying, torrefaction, steam explosion, particle size reduction, densification and/or pelletization of the cellulosic material before the cellulosic material is contacted with the liquid solvent. Such drying, torrefaction, steam explosion, particle size reduction, densification and/or pelletization of the cellulosic material may allow to adjust the amount of water present in the feedstock for improved process operability and economics.

Before being used in the process of the invention, the cellulosic material is preferably processed into small particles. Preferably, the cellulosic material is processed into particles having a particle size distribution with an average particle size of equal to or more than 0.05 millimeter, more preferably equal to or more than 0.1 millimeter, most preferably equal to or more than 0.5 millimeter and preferably equal to or less than 20 centimeters, more preferably equal to or less than 10 centimeters and most preferably equal to or less than 3 centimeters. For practical purposes the particle size in the centimeter and millimeter range can be determined by sieving.

If the cellulosic material is a lignocellulosic material it may also have been subjected to a pretreatment to remove and/or degrade lignin and/or hemicelluloses. Examples of such pre-treatments include fractionation, pulping and torrefaction processes.

In another embodiment, before use in the process of the invention, the cellulosic material may be wet when introduced into the reaction vessel. Preferably, the cellulosic material may comprise from 5 wt%, more preferably from 10 wt%, even more preferably from 25 wt% to 50 wt% of water based on the total amount of cellulosic material, when introduced into the reaction vessel. The cellulosic material may be dried or may be only partly dried to reach a preferred water content of 5 to 30 wt% based on the total weight of cellulosic material and liquid present in the reaction vessel. Optionally, the cellulosic material can be impregnated with water to reach the moisture content of 5 to 30 w%. In the case that the cellulosic material is wet when introduced into the reaction vessel, it may not be necessary to also add water to the system.

The amount of water in a cellulosic material may conveniently be determined by drying, for example according to ASTM-method D2216-98.

By a liquid solvent herein is understood a solvent that has a sufficiently low volatility to avoid the solvent being released through the system that is used to control the pressure. Suitably, the solvent should have a vapour pressure at the operating temperature that is lower than the set pressure/operating pressure, preferably at least 0.5, more preferably 1, particularly 1.5 MPa below the set pressure. Preferably, the solvent is liquid at a pressure of 0.1 MPa (1 bar absolute) and a temperature of 80°C or higher, more preferably 100°C or higher. Most preferably a liquid solvent is herein understood to be a solvent that is liquid at the reaction temperature and operating reaction pressure at which liquefaction is carried out.

Hence, the liquid solvent is preferably a solvent which is liquid at a temperature in the range from equal to or more than 260°C to equal to or less than 400°C at a pressure of 0.1 MPa. Preferably such liquid solvent is still liquid at a temperature in the range from equal to or more than 260°C to equal to or less than 400°C at a higher pressure, for example the pressure during the reaction as mentioned above, for example a pressure of 4 MPa.

Preferably the liquid solvent is an organic solvent, which is herein understood to be a solvent comprising one or more hydrocarbon compounds. By a hydrocarbon compound is herein understood a compound that contains at least one hydrogen atom and at least one carbon atom, more preferably a hydrocarbon compound is herein understood to contain at least one hydrogen atom and at least one carbon atom connected to each other via at least one covalent bond. In addition to the hydrogen atom(s) and carbon atom(s) the hydrocarbon may contain heteroatoms such as for example oxygen, nitrogen and/or sulphur.

In a preferred embodiment the organic solvent comprises one or more carboxylic acids. By a carboxylic acid is herein understood a hydrocarbon compound comprising at least one carboxyl (-CO-OH) group. More preferably the organic solvent comprises equal to or more than 1 wt% carboxylic acids, more preferably equal to or more than 10 wt% carboxylic acids, most preferably equal to or more than 20wt% of carboxylic acids, based on the total weight of organic solvent. There is no upper limit for the carboxylic acid concentration, but for practical purposes the organic solvent may comprise equal to or less than 90wt%, more preferably equal to or less than 80wt% of carboxylic acids, based on the total weight of organic solvent.

In another preferred embodiment the liquid solvent comprises at least one phenolic group, optionally with side groups such as alkyl- or alkoxygroups. Preferably, the liquid solvent comprises at least 1 wt% methoxyphenols, more preferably at least 10 wt% methoxyphenols, even more preferably at least 20 wt% methoxyphenols, based on the total weight of the liquid solvent.

In another embodiment the liquid solvent comprises paraffinic compounds, naphthenic compounds and/or aromatic compounds. Such compounds may be present in refinery streams such as gasoil and/or fuel oil.

Preferably, the liquid solvent used in the conversion of the cellulosic feedstock comprises water in an amount of less than or equal to 30 wt%, more preferably an amount of less than or equal to 25 wt%, even more preferably less than or equal to 20 wt%, and most preferably less than or equal to 15 wt%, based on the total weight of liquid solvent. Water may be present in the liquid solvent in an amount of more than or equal to 2 wt%, preferably more than or equal to 5 wt%, and more preferably in an amount of more than or equal to 10 wt%, based on the total weight of the liquid solvent. The water in the liquid solvent may for example be generated in-situ during the conversion.

In an embodiment of the invention, the process comprises recycling (a part of) the product mixture to be used as part of the liquid solvent. Evidently, that part of the product mixture also should have a vapour pressure at the operating temperature that is lower than the operating pressure as required for the liquid solvent. In the process of the invention, preferably at least part of the liquid solvent consists of a recycled product fraction. The liquid solvent preferably comprises equal to or more than 10 wt%, more preferably equal to or more than 20 wt%, even more preferably equal to or more than 30 wt%, still more preferably equal to or more than 50 wt%, most preferably equal to or more than 80 wt% and preferably equal to or less than 100 wt%, possibly equal to or less 90 wt%, based on the total weight of liquid solvent used in the conversion, of a recycled product fraction.

In an embodiment, for use in the liquefaction process, the recycled product may be mixed with one or more hydrocarbon compound(s) that are derived from a source other than the cellulosic material used as a feedstock, for example a hydrocarbon compound derived from a petroleum source (herein also referred to as fossil source).

In a further embodiment, the process of the invention comprises contacting the cellulosic feed material with a liquid solvent comprising recycled product and water.

The cellulosic material and the total liquid solvent in the conversion process are preferably contacted in a liquid solvent-to-cellulosic material weight ratio of 2:1 to 20:1, more preferably in a liquid solvent-to-cellulosic material weight ratio of 3:1 to 15:1 and most preferably in a liquid solvent-to-cellulosic material weight ratio of 4:1 to 10:1.

The operating temperature at which the conversion of the cellulosic material is carried out according to the invention is in the range from equal to or more than 260°C to equal to or less than 400°C. Preferably, the operating temperature is in the range from equal to or more than 280°C to equal to or less than 380°C, more preferably in the range from equal to or more than 300°C to equal to or less than 350°C.

The conversion of the lignocellulosic feedstock is carried out in an inert atmosphere. By an inert atmosphere is herein understood in the essential absence of any reducing gases (such as for example hydrogen, carbon monoxide or a combination thereof) and in the essential absence of any oxidizing gases (such as for example oxygen). The process according to the invention is hence carried out in the essential absence of hydrogen, carbon monoxide and/or oxygen.

The process of the invention is carried out in the absence of any externally added catalyst. By an externally added catalyst is understood an "ex-situ" catalyst that has not been generated in-situ during the process of liquefaction.

The process according to the invention can be carried out batch-wise, semi-batch wise, continuously and/or in a combination thereof. The process may for example be carried out in a continuously stirred tank reactor or in a plug flow reactor or a combination thereof. In a preferred embodiment, the process is carried out in a plug flow reactor. Preferably, the residence time in any reactor for the conversion process lies in the range from equal to or more than 2 minutes, preferably equal or more than 5 minutes, more preferably equal to or more than 10 minutes, even more preferably equal to or more than 15 minutes, still more preferably equal to or more than 20 minutes; to equal to or less than 120 minutes, more preferably equal to or less than 60 minutes, even more preferably equal to or less than 45 minutes, still more preferably equal to or less than 30 minutes.

The product mixture may contain solids (such as unconverted cellulosic material and/or humins and/or char); liquids (such as water and/or hydrocarbon compounds); and/or gas.

The process of the invention advantageously allows one to produce a product mixture with a viscosity preferably in the range from 1 to 2000 centipoises (cP) at 30°C, more preferably a viscosity in the range from 1 to 1000 centipoises (cP) at 30°C, and most preferably a viscosity in the range from 2 to 500 centipoises (cP) at 30°C. As explained herein a middle fraction of the product mixture is recycled and used as part of the liquid solvent in the liquefaction process. Therefore the liquid solvent may also have a viscosity preferably in the range from 1 to 2000 centipoises (cP) at 30°C, more preferably a viscosity in the range from 1 to 1000 centipoises (cP) at 30°C, and most preferably a viscosity in the range from 2 to 500 centipoises (cP) at 30°C. The viscosity may depend on the number of recycles completed. For example, a product mixture respectively liquid solvent may comprise at least 10 wt%, more preferably at least 30 wt% and most preferably at least 50 wt% (based on the total weight of product mixture respectively liquid solvent) of a 3rd generation or higher generation reaction products and preferably have a viscosity in the range from 2 to 500 centipoises (cP) at 30°C, more preferably a viscosity in the range from 2 to 100 centipoises (cP); or for example a product mixture respectively liquid solvent may comprise at least 10 wt%, more preferably at least 30 wt% and most preferably at least 50 wt% (based on the total weight of product mixture respectively liquid solvent) of a 5th generation or higher generation reaction products and preferably have a viscosity in the range from 10 to 1000 centipoises (cP) at 30°C, more preferably a viscosity in the range from 20 to 500 centipoises (cP) at 30°C.

In an embodiment of the invention, after the (partial) conversion of the cellulosic material, the process comprises a subsequent step wherein the product mixture is separated into a light fraction comprising (hydrocarbon) compounds having a molecular weight of less than 100 grams per mol; a middle fraction comprising (hydrocarbon) compounds having a molecular weight in the range from equal to or more than 100 grams per mol to equal to or less than 1,000 grams per mol; and a heavy fraction comprising (hydrocarbon) compounds having a molecular weight of more than 1,000 grams per mol. The middle fraction may preferably be selected from the product mixture, to produce a fraction for use in recycling. The hydrocarbon compounds may also contain heteroatoms such as sulphur, oxygen and/or nitrogen. The fractions may be separated from the product mixture using any kind of separation technique known by the person skilled in the art, including for example filtration, settling, fractionation (including atmospheric or vacuum distillation and/or flashing), centrifugation, cyclone separation, membrane separation and/or membrane filtration, phase separation, (solvent) extraction and/or a combination thereof. The product mixture middle fraction preferably comprises one or more oxygenates, more preferably two or more oxygenates. By an oxygenate is herein understood a hydrocarbon compound that contains at least one oxygen atom, more preferably by an oxygenate is herein understood a hydrocarbon compound further containing at least one oxygen atom bonded to a carbon atom via at least one covalent bond. Examples of oxygenates include hexanoic acid (boiling at about 205°C at 0.1 MPa), pentanoic acid (boiling at about 186-187°C at 0.1 MPA), levulinic acid (boiling at about 245-246°C at 0.1 MPa), guaiacol (boiling at about 204-206°C at 0.1 MPa), syringol (boiling at about 261°C at 0.1 MPA) and/or gamma-valerolactone (boiling at about 207-208°C at 0.1 MPa). Preferably the product mixture middle fraction is a fraction of which at least 90 wt% has a boiling temperature of equal to or more than 150°C at 0.1 MPa and of which 90 wt% melts at a temperature equal to or less than the reaction temperature.

In a further embodiment the process comprises an additional step comprising hydrotreatment of at least part of the produced bio-oil. The hydrotreatment may for example comprise hydrogenation, hydrooxygenation and/or hydrodesulphurization using technologies and methods known in the art.

In a another embodiment the process according to the invention may further comprise a catalytic cracking step, preferably a fluidized catalytic cracking step, for example comprising contacting a feed comprising at least part of the bio-oil - which bio-oil may optionally have been hydrotreated - with a fluidized catalytic cracking catalyst at a temperature of equal to or more than 400°C, preferably a temperature in the range of equal to or more than 450°C to equal to or less than 800°C, to produce one or more cracked products.

In the catalytic cracking step one or more cracked products are produced. In a preferred embodiment this/these one or more cracked products is/are subsequently fractionated and/or hydrotreated to produce one or more base fuels.

Such a base fuel may conveniently be blended with one or more other components to produce a biofuel or biochemical. Examples of such one or more other components include anti-oxidants, corrosion inhibitors, ashless detergents, dehazers, dyes, lubricity improvers and/or mineral fuel components, but also conventional petroleum derived gasoline, diesel and/or kerosene fractions.

By a biofuel is herein understood a fuel that is at least party derived from a renewable energy source. The biofuel may advantageously be used in the engine of a transportation vehicle.

<u>Examples:</u>

The invention will now be further illustrated by means of the following non-limiting examples and comparative examples.

<u>*Materials and methods*</u>

Pine wood was obtained from Rettenmaier & Sohne GmbH (Germany). It was crushed to the particle size of <0.5 mm and then was dried at 105°C for 24 hours in an oven. The composition of the pine wood is provided in Table 1 (see also Industrial & Engineering Chemistry Research 2007, 46, (26), 9238-9247). All other chemicals were obtained from Sigma Aldrich with a purity >98%.

Table 1: Pine wood composition

| Composition | Value | Composition | Value |
|---|---|---|---|
| chemical analysis | wt.%, dry | ultimate analysis | wt.%, dry |
| cellulose | 35 | C | 46.58 |
| hemicellulose | 29 | H | 6.34 |
| Lignin | 28 | O (by difference) | 46.98 |
| alkali metals | mg/kg, dry | N | 0.04 |

(continued)

| Composition | Value | Composition | Value |
|---|---|---|---|
| K | 34 | S | 0.06 |
| Mg | 134 | | |
| Ca | 768 | | |
| total ash | 2600 | | |

Experiments were carried out in a batch autoclave having an internal volume of 45 mL that was equipped with a back pressure regulator that maintain operating pressure at/or below a pre-set level by releasing excessive vapor. The autoclave was heated by immersion into a hot bed of fluidized sand using a robot arm.

The experimental procedure for the refill runs was as follows: The feed charge was prepared by mixing the target amount of wood, water and guaiacol at 20:10:70 or 20:0:80 weight ratio. The feed solution was mixed thoroughly, loaded into the 45 mL reactor. The reactor was closed tightly, flushed with nitrogen several times to remove any oxygen present in the system and pressurized to about 5 bar of nitrogen. The stirrer was turned on and the autoclave was immersed into the preheated fluidized sand bed which had a temperature of around 5°C higher than the desired reaction temperature. After the desired reaction time, the reactor was lifted off the sand bath and quenched in a cold water bath. The autoclave was subsequently cooled to ambient temperature and gas sample was taken using a syringe. After depressurizing, the autoclave was then opened and a small amount of sample was taken out (normally 1 g) for the analysis. The remaining product (liquid and solids in suspension) was then collected in a glass vial and the reactor was rinsed with acetone to remove leftover liquid and solid deposits. The obtained acetone wash was filtered with filter paper of size 1.6 $\mu$m. The obtained product slurry (liquid + solid) was also filtered with a filter of pore size 1.6 $\mu$m, when necessary after dilution in some acetone to lower its viscosity. The obtained solid was dried at 105°C and atmospheric pressure.

The reaction temperature was defined as being the end temperature and reaction time was defined as being the time that the autoclave spends in the hot sand bath.

Gas samples were analyzed with an off-line gas chromatography (Varian Micro GC CP-4900 with two analytical columns, 10m Molsieve 5A and 10 m PPQ, using Helium as carrier gas). Gas chromatography-mass spectrometry (GC-MS) analysis was performed with an Agilent GC-MS (GC 7890A MS 5975C) to identify the compounds present in the liquid after the reaction. The liquid product was analyzed with Gel Permeation Chromatography (GPC) (Agilent 1200 series, with RI and UV (wavelength: 254 nm) detectors), using 3 GPC PLgel 3$\mu$m MIXED-E columns connected in series. The column was operated at 40°C with tetrahydrofuran (THF) as solvent. Apparent molecular weights ($M_{W,GPC}$) were determined by calibration with a solution of polystyrene with molecular weight ranging from 162 to 30230 Da. The elemental composition of the solid was determined using Elemental Analyzer (Interscience Flash 2000).

*Analysis* - Gas, liquid and solid yields were calculated as Carbon-fraction of the wood intake (equation 1-3; excluding guaiacol) rather than more common weight fraction to avoid counting the oxygen content or water as valuable product for subsequent conversion to biofuel. Gas yield was calculated using composition analyzed by the off-line GC, available gas volume and, end pressure and temperature after cooling, using the ideal gas law and defining the available gas volume as being the total volume of the reactor minus the volume of the liquid product. The solid yield was determined based on the weight fraction of solid residue and its carbon content. The liquid yield was obtained by difference for convenience.

$$Yield_{Solid}\ (C\%) = \frac{M_{Acetone\ insoluble}}{M_{Wood\ intake\ (dry)}} x100 \qquad\qquad (\ 1\ )$$

$$Yield_{Gas}\ (C\%) = \frac{M_{Gas\ formed}}{M_{Wood\ intake\ (dry)}} x100 \qquad\qquad (\ 2\ )$$

$$Yield_{Liquid}\ (C\%) = 100 - Yield_{Solid}\ (C\%) - Yield_{Gas}\ (C\%) \qquad\qquad (\ 3\ )$$

Where M stands for total mass of the carbon present. It should be noted that by doing so all the losses are attributed to the liquid and hence the liquid yield may be over-reported.

The liquid product was further divided into two fractions, based on apparent molecular weight (as determined by GPC), namely solvent/guaiacol with $M_{W,GPC}$ <210 Da and bio-oil with $M_{W,GPC}$ >210 Da, from which the 'vacuum residue' (VR) is defined as $M_{W,GPC}$ >1000 Da. The vacuum residue fraction was defined as the fraction of the bio-oil (excluding solvent) that is found in the heavy product ($M_{W,GPC}$ >1000 Da) based on eq. 4. It assumes comparable response factor for the light and heavy bio-oil components.

$$Vacuum\ residue\ fraction = \frac{Area\ corresponds\ to\ M_{W,GPC}>1000\ Da}{Area\ corresponds\ to\ M_{W,GPC}>210\ Da} \qquad (4)$$

Molar mass cut-off of the bio-oil was set at 210 Da to exclude the solvent (Guaiacol, MW=124 Da) and its eventual primary degradation products (e.g. 1,2-dimethoxybenzene).

*Example 1 and comparative example*

Figure 1 shows the product yields and the vacuum residue fraction (VR fraction) of experiments run at a weight feed ratio of wood:water:guaiacol = 20:10:70 under reduced pressure (i.e. with release of excessive vapor, low P.-1/2)or under autogenous pressure (i.e. without pressure regulation, standard 1).

Releasing the steam pressure obviously runs the risk of delivering low oil yield. However, no decrease of bio-oil yield but a slight increase in bio-oil yield (from about 93 to about 95C%), nor severe deterioration of bio-oil quality (vacuum residue fraction increases from 28 to around 35%) was found by operating at 30-40 bar instead of the autogenous pressure of 90-105 bar reached in absence of back-pressure regulator (see table 2). In both cases, Low P.-1 and Low P.-2, the resulting bio-oil consists of a mixture of highly aromatic components with similar Mw, ranging from 200 to 3000 Da, as measured by GPC (see figure 1).

Table 2:

Experimental data. T=325°C; reaction time=35 mins; G=Guaiacol; W=Wood; WA: Water; Autoclave: 45 mL; Low P.=low pressure.

| | Pressure (MPa) | Feed (G:W:WA) | Yield (C%) | | | VR fraction |
|---|---|---|---|---|---|---|
| | | | Liquid (C%) | Gas (C%) | Solid (C%) | |
| Low P.-1 | 4.1 | 70:20:10 | 94.4 | 5.4 | 0.2 | 0.35 |
| Low P.-2 | 3.3 | 70:20:10 | 94.7 | 5.1 | 0.2 | 0.34 |
| Standard-1* | 7.1 | 70:20:10 | 92.4 | 6.9 | 0.7 | 0.28 |
| *two liquid phases (organic and aqueous), all the measurements for organic phase | | | | | | |

**Claims**

1. A process for the high temperature conversion of a cellulosic material into a bio-oil, wherein,
in the absence of any externally added catalyst and in an inert atmosphere, the cellulosic material is contacted in a reaction vessel with a liquid solvent, wherein water is present from 2% up to 30 wt%, based on the total amount of cellulosic material and liquid solvent present in the vessel, at an operating temperature in the range from equal to or more than 260°C to equal to or less than 400°C, and at an operating pressure that is lower than the autogenous pressure at the operating temperature, the pressure being from equal to or more than 1.0 MPa to equal to or less than 8.0 MPa, to produce a product mixture comprising bio-oil.

2. The process according to claim 1, wherein the operating temperature is in the range from equal to or more than 280° to equal to or less than 380°C, and preferably in the range from equal to or more than 300°C to equal to or less than 350°C.

3. The process according to claim 1 or 2, wherein the operating pressure is in the range from equal to or more than 2.0, MPa, preferably equal to or more than 2.5 MPa, more preferably equal to or more than 3.0 MPa, to equal to or less than 7.0 MPa, preferably equal to or less than 6.0 MPa, more preferably equal to or less than 5.5 MPa, still more preferably equal to or less than 5.0 MPa, especially equal to or less than 4.5 MPa.

4. The process according to anyone of the preceding claims, wherein the reaction vessel is provided with a pressure control system that opens a pressurization valve and shuts it once the internal pressure has reached a certain setpoint in the desired operating pressure range.

5. The process of any one of the claims 1-3, wherein the reaction vessel is equipped with an open gas restriction outlet that leads to a compartment of low but controlled pressure.

6. The process according to anyone of the preceding claims, wherein the cellulosic material comprises from 5 to 50 wt% of water based on the total amount of cellulosic material, when introduced into the reaction vessel.

7. The process according to anyone of the preceding claims, wherein liquid solvent has a vapour pressure at the operating temperature that is lower than the operating pressure.

8. The process according to claim 7, wherein liquid solvent is liquid at a temperature in the range from equal to or more than 260°C to equal to or less than 400°C at a pressure of 0.1 MPa.

9. The process according to anyone of the preceding claims, wherein the liquid solvent is an organic solvent.

10. The process of claim 9, wherein the organic solvent comprises one or more carboxylic acids.

11. The process of claim 9 or 10, wherein the organic solvent comprises paraffinic compounds, naphthenic compounds and/or aromatic compounds.

12. The process of any one of claims 9 to 11, wherein the organic solvent comprises at least one phenolic group, optionally substituted with side groups.

13. The process according to anyone of the preceding claims, wherein the process further comprises recycling a part of the product mixture having a vapour pressure at the operating temperature that is lower than the operating pressure, to be used as part of the liquid solvent.

14. The process according to anyone of the preceding claims, wherein the process further comprises a subsequent step wherein the product mixture is separated into a light fraction comprising compounds having a molecular weight of less than 100 grams per mol; a middle fraction comprising compounds having a molecular weight in the range from equal to or more than 100 grams per mol to equal to or less than 1,000 grams per mol; and a heavy fraction comprising compounds having a molecular weight of more than 1,000 grams per mol.

15. The process according to claim 14, wherein at least 30 wt% of the liquid solvent used in the conversion process consists of recycled product mixture middle fraction.

Labels: Pressure (Feed composition; Guaiacol: Wood: Water)

1-> 71 bar (70:20:10)

2-> 41 bar (70:20:10)

3-> 33 bar (70:20:10)

**Fig. 1**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X,D | WO 2013/072383 A1 (SHELL INT RESEARCH [NL]; SHELL OIL CO [US]) 23 May 2013 (2013-05-23) | 1-15 | INV. C10G1/02 C10B53/02 C10G1/00 |
| Y | * claims 1-15 * * page 8, line 9 - page 9, line 15 * * page 14, lines 1-12 * ----- | 4,5 | |
| Y | US 2002/134704 A1 (MITCHELL ALLEN R [US] ET AL) 26 September 2002 (2002-09-26) * paragraphs [0057], [0060], [0063], [0067] * ----- | 4,5 | |
| Y | EP 2 182 047 A1 (TOYOTA MOTOR CO LTD [JP]) 5 May 2010 (2010-05-05) * paragraphs [0071], [0072], [0081] * ----- | 4,5 | |
| Y | CN 103 265 967 A (UNIV ZHEJIANG) 28 August 2013 (2013-08-28) * claim 1 * * paragraphs [0028], [0033] * ----- | 4,5 | |
| Y | US 2013/167603 A1 (BATHURST CHRISTOPHER FRANCIS [NZ] ET AL) 4 July 2013 (2013-07-04) * paragraphs [0063] - [0076] * ----- | 4,5 | TECHNICAL FIELDS SEARCHED      (IPC) C10G C10B |

The present search report has been drawn up for all claims

| Place of search | Date of completion of the search | Examiner |
|---|---|---|
| The Hague | 6 May 2016 | Pardo Torre, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 20 1711

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2016

| Patent document cited in search report | | | Publication date | Patent family member(s) | | | Publication date |
|---|---|---|---|---|---|---|---|
| WO 2013072383 | A1 | | 23-05-2013 | US | 2013247449 A1 | | 26-09-2013 |
| | | | | US | 2014007492 A1 | | 09-01-2014 |
| | | | | WO | 2013072383 A1 | | 23-05-2013 |
| US 2002134704 | A1 | | 26-09-2002 | NONE | | | |
| EP 2182047 | A1 | | 05-05-2010 | BR | PI0814597 A2 | | 25-08-2015 |
| | | | | CN | 101765650 A | | 30-06-2010 |
| | | | | EP | 2182047 A1 | | 05-05-2010 |
| | | | | JP | 4957661 B2 | | 20-06-2012 |
| | | | | JP | 2009046661 A | | 05-03-2009 |
| | | | | RU | 2010105914 A | | 27-08-2011 |
| | | | | US | 2010192457 A1 | | 05-08-2010 |
| CN 103265967 | A | | 28-08-2013 | NONE | | | |
| US 2013167603 | A1 | | 04-07-2013 | AU | 2012279955 A1 | | 20-02-2014 |
| | | | | US | 2013167603 A1 | | 04-07-2013 |
| | | | | WO | 2013005104 A2 | | 10-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013072383 A

**Non-patent literature cited in the description**

- CRC Handbook of Chemistry and Physics. 2003, 6-10-6-11

- *Industrial & Engineering Chemistry Research,* 2007, vol. 46 (26), 9238-9247